# EUROPEAN PATENT APPLICATION

(11) **EP 4 468 395 A1**
(43) Date of publication of application: **27.11.2024**
(21) Application number: 22960209.9
(22) Date of filing: 30.09.2022
(51) Int. Cl.: H01M 4/134, H01M 10/054, H01M 10/42

(54) **SODIUM ION BATTERY AND ELECTRIC APPARATUS COMPRISING SAME**

(71) Applicant: Contemporary Amperex Technology Co., Limited, Ningde, Fujian 352100 (CN)
(72) Inventor: QIN, Meng, Ningde, Fujian 352100 (CN); GUAN, Yingjie, Ningde, Fujian 352100 (CN); YANG, Huiling, Ningde, Fujian 352100 (CN); ZHAO, Yuzhen, Ningde, Fujian 352100 (CN); WEN, Yan, Ningde, Fujian 352100 (CN); HUANG, Qisen, Ningde, Fujian 352100 (CN)
(74) Representative: Kraus & Lederer PartGmbB
(86) International application number: PCT/CN2022/123015
(87) International publication number: WO 2024/065578

(57) **Abstract**

The present application relates to a sodium-ion battery and an electrical apparatus including the same. The sodium-ion battery includes a positive electrode sheet, a separator, and a negative electrode current collector, wherein the separator is disposed between the positive electrode sheet and the negative electrode current collector, a surface of the negative electrode current collector is provided with a protective layer capable of allowing sodium-ions to pass freely, a material of the protective layer mainly includes a polymer material, there is an accommodation area between the protective layer and the negative electrode current collector, and the accommodation area has a sodium metal layer formed on the surface of the negative electrode current collector. The sodium-ion battery can effectively improve the inhibition of sodium dendrites, reduce side reactions between sodium metal and an electrolyte solution, and improve the cycle performance of the sodium-ion battery. At the same time, there is no need to set up an additional negative electrode active material layer, which reduces the cost of the sodium-ion battery and improves the energy density of sodium-ion battery.

## Description

### Technical Field

The present application relates to the technical field of sodium batteries, in particular to a sodium-ion battery and an electrical apparatus comprising the same.

### Background

A sodium-ion battery is a secondary battery that mainly relies on the movement of sodium-ions between positive and negative electrodes to work: when charging, Na⁺ deintercalates from the positive electrode, passes through a separator and is embedded into the negative electrode, leaving the positive electrode in a sodium-poor state at high potential, and the negative electrode in a sodium-rich state at low potential; and the discharge process is the opposite, Na⁺ deintercalates from the negative electrode, passes through the separator and is re-intercalated into a positive electrode material, returning the positive electrode to the sodium-rich state.

Compared with lithium-ion batteries, sodium-ion batteries have the advantages of better safety performance, wide sources, and low costs. However, their larger ion mass and ion radius cause the energy density of the sodium-ion batteries to be lower than that of the sodium-ion batteries, which hinders its development to a certain extent.

### Summary of the Invention

The present application is conducted in view of the above problems, and its objective is to provide a sodium-ion battery and an electrical apparatus including the same.

In order to achieve the above objective, a first aspect of the present application provides a sodium-ion battery, which includes a positive electrode sheet, a separator and a negative electrode current collector, the separator is disposed between the positive electrode sheet and the negative electrode current collector, a surface of the negative electrode current collector is provided with a protective layer capable of allowing sodium-ions to pass freely, and a material of the protective layer mainly includes a polymer material.

A second aspect of the present application provides an electrical apparatus, including at least one of the sodium-ion batteries described in the first aspect.

### Brief Description of the Drawings

Fig. 1 is a schematic diagram of a sodium-ion battery of an embodiment of the present application;
Fig. 2 is an exploded view of the sodium-ion battery of the embodiment of the present application shown in Fig. 1;
Fig. 3 is a schematic diagram of a battery module of an embodiment of the present application;
Fig. 4 is a schematic diagram of a battery pack of an embodiment of the present application;
Fig. 5 is an exploded view of the battery pack of the embodiment of the present application shown in Fig. 4;
Fig. 6 is a schematic diagram of an electrical apparatus where a sodium-ion battery is used as a power source of an embodiment of the present application;

### Description of reference numerals:

1, battery pack; 2, upper box; 3, lower box; 4, battery module; 5, sodium-ion battery; 51, case; 52, electrode assembly; 53, cover plate; and 6, electrical apparatus.

### Detailed Description

In the following, embodiments of a sodium-ion battery and an electrical apparatus including the same of the present application are specifically disclosed by properly referring to the detailed description of the drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, the range "a-b" of values represents the abbreviated representation of any real number combination between a and b, where a and b are real numbers. For example, the numerical range "0-5" indicates that all real numbers between "0-5" are listed in this article, and "0-5" is only an abbreviated representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), indicating that the method may include steps (a) and (b) performed sequentially, or may include steps (b) and (a) performed sequentially. For example, the reference to the method may further include a step (c), indicating that the step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application indicate open-ended, or may be closed-ended. For example, the "including" and "comprising" may indicate that it is also possible to include or comprise other components not listed, and it is also possible to include or comprise only the listed components.

If not specifically stated, the term "or" is inclusive in the present application. By way of example, the phrase "A or B" indicates "A, B, or both A and B". More specifically, the condition "A or B" is satisfied by any of the following: A is true (or present) and B is false (or absent); A is false (or absent) and B is true (or present); or both A and B are true (or present).

At present, in order to further reduce the cost of batteries and increase the energy density of the batteries, a type of negative electrode-less batteries has been developed in the field of lithium-ion batteries, that is, a negative electrode does not contain a traditional negative electrode active material layer. However, there are few studies on negative electrode-less batteries in the field of sodium-ion batteries. If the negative electrode active material layer in a negative electrode of a sodium-ion battery is directly omitted, sodium metal deposited on a negative electrode current collector will produce serious sodium dendrites in a charging and discharging process, resulting in poor cycle performance of the battery.

Based on this, an example of the present application provides a sodium-ion battery. The sodium-ion battery includes a positive electrode sheet, a separator and a negative electrode current collector, the separator is disposed between the positive electrode sheet and the negative electrode current collector, a surface of the negative electrode current collector is provided with a protective layer capable of allowing sodium-ions to pass freely, and the protective layer mainly includes a polymer material.

In the above-mentioned sodium-ion battery, on the basis of omitting the negative electrode active material layer, a polymer material is selected as the protective layer. Pores of the polymer material itself can provide sodium-ion channels, so that sodium-ions can freely pass through the protective layer in a charging and discharging process to be deposited on the surface of the negative electrode current collector, and is located in an accommodation area formed between a side of the protective layer close to the negative electrode current collector and the surface of the negative electrode current collector. In this way, on the one hand, the presence of the protective layer can have a limiting effect and inhibit the growth of sodium dendrites. On the other hand, a surface of sodium metal may further be protected, and side reactions between the sodium metal and an electrolyte solution are reduced, thereby comprehensively improving the cycle performance of the sodium-ion battery. At the same time, there is no need to set up an additional negative electrode active material layer, which reduces the cost of the sodium-ion battery and improves the energy density of the sodium-ion battery.

It may be understood that "free passage of sodium-ions" means that in the charging and discharging process, the sodium-ions can pass through the protective layer to be deposited on the surface of the negative electrode current collector, or leave the surface of the negative electrode current collector and passes through the protective layer to return to the positive electrode sheet.

In some examples, there is an accommodation area between the protective layer and the negative electrode current collector, and the accommodation area includes a sodium metal layer formed on the surface of the negative electrode current collector.

In some examples, the sodium metal layer is formed in the charging and discharging process of the sodium-ion battery. Without limitation, the charging and discharging process may include a charging and discharging process during chemical formation, or may also include a charging and discharging process during use.

In some of examples, a thickness of the sodium metal layer is P, and 0<P≤400 nm; and optionally, the thickness P of the sodium metal layer is greater than or equal to 150 nm and less than or equal to 300 nm. Different from the additional sodium metal layer provided in a negative electrode of an existing sodium-ion battery, the sodium metal layer is formed after the first charging and discharging and has a thin thickness. Specifically, the thickness of the sodium metal layer includes but is not limited to: 150 nm, 155 nm, 160 nm, 166 nm, 194 nm, 196 nm, 198 nm, 200 nm, 201 nm, 203 nm, 207 nm, 210 nm, 222 nm, 225 nm, 230 nm, 233 nm, 240 nm, 241 nm, 250 nm, 253 nm, 258 nm, 260 nm, 265 nm, 270 nm, 280 nm, 290 nm, 300 nm, or within the range of any two of the above values.

In some examples, the polymer material includes one or more of sodium carboxymethyl cellulose, carboxymethyl cellulose sodium, sodium alginate, sodium polyacrylate, polyvinylidene fluoride, polyvinylidene fluoride-hexafluoropropylene, styrene butadiene rubber, polytetrafluoroethylene, polyvinyl alcohol and polyethylene oxide. Choosing the appropriate polymer material will help the sodium-ions pass through the protective layer and better avoid the side reactions between the deposited sodium metal layer and the electrolyte solution.

In some examples, the thickness of the protective layer is 0.2 µm to 5 µm. Further, the thickness of the protective layer is 1 µm to 2 µm. This can better protect the surface of the deposited sodium metal layer, avoid the side reactions between it and the electrolyte solution, meanwhile avoid being too thick and affecting the migration of the sodium-ions, and improve the energy density of the battery. Specifically, the thickness of the protective layer includes but is not limited to: 0.2 µm, 0.5 µm, 0.8 µm, 1 µm, 1.2 µm, 1.5 µm, 1.7 µm, 2 µm, 2.2 µm, 2.5 µm, 3 µm, 4 µm, 5 µm, or within the range of any two of the above values.

In some examples, the weight of the protective layer is 0.1 to 5 mg/1540.25 mm² based on a surface area of the negative electrode current collector. Further, the weight of the protective layer is 0.5 to 1 mg/1540.25 mm². This can better protect the surface of the deposited sodium metal layer, avoid the side reactions between it and the electrolyte solution, meanwhile avoid being too thick and affecting the migration of the sodium-ions, and improve the energy density of the battery. Specifically, based on the surface area of the negative electrode current collector, the weight of the protective layer includes but is not limited to (mg/1540.25 mm²):0.1, 0.2, 0.3, 0.4, 0.5, 0.6, 0.66, 0.68, 0.75, 0.82, 0.84, 0.85, 0.86, 0.88, 0.9, 0.98, 1, 2, 3, 4, 4.65, 5, or within the range of any two of the above values.

Without limitation, the weight of the protective layer is calculated as follows: the negative electrode current collector with the protective layer on the surface is punched into discs with a unit weight area of 1540.25 mm², weighing is performed, and the weight of the blank negative electrode current collector is deducted (which is also punched into the discs with the unit weight area of 1540.25 mm²), which is the weight of the protective layer.

In some examples, the negative electrode current collector may adopt one or more of a metal foil and a composite current collector. For example, a copper foil and an aluminum foil may be used as the metal foil. The composite current collector may include a high molecular material substrate layer and a metal layer formed on at least one surface of a high molecular material substrate. The composite current collector may be formed by forming a metal material on the polymer material substrate. The metal material includes but is not limited to copper, copper alloy, nickel, nickel alloy, titanium, titanium alloy, silver and silver alloy, etc., and the high molecular material substrate includes but not limited to substrates such as polypropylene (PP), polyethylene terephthalate (PET), polybutylene terephthalate (PBT), polystyrene (PS), and polyethylene (PE).

In some examples, the surface of the negative electrode current collector is not provided with a negative electrode active material. Examples of the negative electrode active material include hard carbon, soft carbon, and sodium metal (here refers to sodium metal pre-deposited on the surface of the negative electrode current collector (the thickness is usually about 1 µm), which is different from the sodium metal formed in the charging and discharging process in the present application), tin oxide, cobalt vanadium sulfide, etc.

In some examples, the protective layer further optionally includes a conductive agent. The conductive agent may be selected from at least one of superconducting carbon, acetylene black, carbon black, Ketjen black, carbon dots, carbon nanotubes, graphene, and carbon nanofibers. A weight ratio of the conductive agent in the protective layer is 0 to 20% by weight, based on a total weight of the protective layer.

In some examples, the nucleation layer further optionally includes other auxiliaries, such as a thickener (e.g., sodium carboxymethyl cellulose (CMC-Na)). A weight ratio of the auxiliaries in the protective layer is 0 to 15% by weight, based on the total weight of the protective layer.

In addition, it may be understood that the negative electrode current collector has two opposite surfaces in its own thickness direction, and the protective layer is disposed on either one or both of the two opposite surfaces of the negative electrode current collector.

In some examples, the protective layer may be prepared on the surface of the negative electrode current collector through the following modes: dispersing the above-mentioned components for preparing the protective layer, such as polymers, conductive agents, binders and any other components in a solvent (such as deionized water), so as to form a slurry, wherein a solid content of the slurry is 30 wt% to 70 wt%, and a viscosity at a room temperature is adjusted to 2000 mPa s to 10000 mPa s; and coating the negative electrode current collector with the obtained slurry, and performing a drying process.

In some examples, the sodium-ion battery further includes an electrolyte solution. The electrolyte solution serves to conduct ions between the positive electrode sheet and the negative electrode current collector.

In some examples, the electrolyte solution includes an electrolyte sodium salt and a solvent.

In some examples, the solvent in the electrolyte solution includes an ether solvent. Ether solvent molecules can build a stable electrode/electrolyte solution interface on the surface of the negative electrode current collector, forming a stable solid electrolyte interface (SEI), reducing electrochemical polarization and further avoiding the occurrence of sodium dendrites. Further, the solvent of the electrolyte solution includes one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether and crown ether.

In some examples, the electrolyte sodium salt in the electrolyte solution includes one or more of sodium hexafluorophosphate, sodium difluoroborate, sodium tetrafluoroborate, sodium bisoxaloborate, sodium perchlorate, sodium hexafluoroarsenate, sodium bis(fluorosulfonyl) imide, sodium trifluoromethanesulfonate and sodium bis(trifluoromethanesulfonyl) imide.

In some examples, a molar concentration of the electrolyte sodium salt in the electrolyte solution is 0.5 mol/L to 8 mol/L. Further, the molar concentration of the electrolyte sodium salt in the electrolyte solution is 1 mol/L to 4 mol/L.

In some examples, the electrolyte solution further includes a nitrate additive. The nitrate additive provides NO₃⁻, NO₃⁻ may participate in the formation of the sodium-ion solvation sheath, forming a highly conductive SEI layer containing NaNₓO_{y} and Na₃N on the surface of metallic sodium, and the highly conductive SEI layer can adjust the deposition morphology of sodium metal, and the adjustment process is continued in a cycle process, so that metallic sodium can deposit and grow uniformly, further avoiding the formation of the sodium dendrites. At the same time, it can also improve the Coulombic efficiency and a capacity retention rate of the sodium-ion battery.

In some examples, the nitrate additive includes one or more of lithium nitrate, sodium nitrate, potassium nitrate and rubidium nitrate.

In some examples, an addition amount of the nitrate additive is 0.5% to 20% based on a mass percentage in the electrolyte solution. Further, the addition amount of the nitrate additive is 2% to 10%. In this way, the Coulombic efficiency and the capacity retention rate of the sodium-ion battery can be further improved. Specifically, based on the mass percentage in the electrolyte solution, the addition amount of the nitrate additive includes but is not limited to: 0.5%, 1%, 1.5%, 2%, 3%, 4%, 5%, 6%, 7%, 8%, 9%, 10%, 12%, 15%, 18%, 20%, or within the range of any two of the above values.

In some examples, the surface of the sodium metal layer further includes an SEI layer, and a material of the SEI layer includes one or more of NaNₓO_{y} (3x+2y=1) and Na₃N.

In some examples, the electrolyte solution further optionally includes other additives. For example, the additive may include a negative electrode film-forming additive and a positive electrode film-forming additive, and may also include additives that can improve certain battery properties, such as additives that improve battery overcharge performance, additives that improve battery high or low temperature performance, and the like.

In some examples, the positive electrode includes one of a sodium transition metal oxide positive electrode, a polyanionic compound positive electrode, and a Prussian blue compound positive electrode.

Specifically, the positive electrode sheet includes a positive electrode current collector and a positive electrode active material layer formed on at least part of the surface of the positive electrode current collector. The positive electrode active material layer includes a positive electrode active material. The positive electrode active material may include at least one of a sodium transition metal oxide, a polyanionic compound and a Prussian blue compound. However, the present application is not limited to these materials, and other conventional materials that can be used as positive electrode active materials of the sodium-ion battery may further be used.

As an optional technical solution of the present application, in the sodium transition metal oxide, the transition metal may be at least one of Mn, Fe, Ni, Co, Cr, Cu, Ti, Zn, V, Zr and Ce. The sodium transition metal oxide is, for example, NaₓMO₂, where M is one or more of Ti, V, Mn, Co, Ni, Fe, Cr and Cu, 0<x≤1.

As an optional technical solution in the present application, the polyanionic compound may be a type of compound having sodium-ions, transition metal ions and tetrahedral (YO₄)ⁿ⁻ anion units. The transition metal may be at least one of Mn, Fe, Ni, Co, Cr, Cu, Ti, Zn, V, Zr and Ce; Y may be at least one of P, S and Si; and n represents valence state of (YO₄)ⁿ⁻.

The polyanionic compound may further be a type of compound having sodium-ions, transition metal ions, tetrahedral (YO₄)ⁿ⁻ anion units and halogen anions. The transition metal may be at least one of Mn, Fe, Ni, Co, Cr, Cu, Ti, Zn, V, Zr and Ce; Y may be at least one of P, S and Si; n represents the valence state of (YO₄)ⁿ⁻; and halogen may be at least one of F, Cl and Br.

The polyanionic compound may further be a type of compound having sodium-ions, tetrahedral (YO₄)ⁿ⁻ anion units, polyhedral units (ZO_{y})^{m+} and optional halogen anions. Y may be at least one of P, S and Si, n represents the valence state of (YO₄)ⁿ⁻; Z represents the transition metal, which may be at least one of Mn, Fe, Ni, Co, Cr, Cu, Ti, Zn, V, Zr and Ce, and m represents the valence state of (ZO_{y})^{m+}; and the halogen may be at least one of F, Cl and Br.

The polyanionic compound, may be, for example, at least one of NaFePO₄, Na₃V₂(PO4)₃ (sodium vanadium phosphate, NVP for short), Na₄Fe₃(PO₄)₂(P₂O₇), NaM'PO4F (M' is one or more of V, Fe, Mn and Ni) and Na₃(VO_{y})₂(PO₄)₂F_{3-2y} (0≤y≤1).

The Prussian blue compound may be a type of compound having sodium-ions, transition metal ions and cyanide ions (CN⁻). The transition metal may be at least one of Mn, Fe, Ni, Co, Cr, Cu, Ti, Zn, V, Zr and Ce. The Prussian blue compound is, for example, NaₐMe_{b}Me'_{c}(CN)₆, where Me and Me' are each independently at least one of Ni, Cu, Fe, Mn, Co and Zn, 0<a≤2, 0<b<1, and 0<c< 1.

As an optional technical solution of the present application, the positive electrode active material layer may further include a conductive agent to improve the conductive performance of the positive electrode. There is no particular limitation on the type of the conductive agent in the present application, which may be selected according to actual requirements. As an example, the conductive agent may be one or more of graphite, superconducting carbon, acetylene black, carbon black, Ketjen black, carbon dots, carbon nanotubes, graphene and carbon nanofibers.

As an optional technical solution of the present application, the positive electrode active material layer may further include a binder to firmly bond the positive electrode active material and the optional conductive agent to a positive electrode current collector. There is no particular limitation on the type of the binder in the present application, which may be selected according to actual requirements. As an example, the binder may be at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene butadiene rubber (SBR), carboxymethyl cellulose (CMC), sodium alginate (SA), polymethylacrylic acid (PMA) and carboxymethyl chitosan (CMCS).

As an optional technical solution of the present application, the positive electrode current collector may adopt a conductive carbon sheet, a metal foil, a carbon-coated metal foil, a porous metal plate or a composite current collector, where a conductive carbon material of the conductive carbon sheet may be at least one of superconducting carbon, acetylene black, carbon black, Ketjen black, carbon dots, carbon nanotubes, graphite, graphene and carbon nanofibers, and the metal materials of the metal foil, the carbon-coated metal foil and the porous metal plate may be each independently selected from at least one of copper, aluminum, nickel and stainless steel. The composite current collector may be a composite current collector formed by a compound of a metal foil material and a polymer base film.

As an optional technical solution of the present application, the positive electrode current collector is, for example, one or more of a copper foil, an aluminum foil, a nickel foil, a stainless steel foil, a stainless steel mesh, and a carbon-coated aluminum foil. The aluminum foil is preferably used.

The above positive electrode sheet may be prepared in accordance with a conventional method in the art. The positive electrode active material, and the optional conductive agent and binder are usually dispersed in a solvent (such as N-methylpyrrolidone (NMP)) to form a uniform positive electrode slurry, and the positive electrode current collector is coated with the positive electrode slurry, oven-dried, and cold pressed to obtain the positive electrode sheet.

In addition, there is no particular limitation on the type of the separator is in the present application, and any well-known separator with a porous structure having good chemical stability and mechanical stability may be selected.

In some examples, a material of the separator may be selected from at least one of glass fiber, non-woven cloth, polyethylene, polypropylene, and polyvinylidene fluoride. The separator may be a single-layer film or a multi-layer composite film, which is not particularly limited. When the separator is the multi-layer composite film, the material of each layer may be the same or different, which is not particularly limited.

In some examples, a thickness of the separator is 6 µm to 40 µm, optionally 12 µm to 20 µm.

The above sodium-ion battery may be prepared according to the conventional method in the art. Specifically, the above positive electrode sheet, separator, and negative electrode current collector are stacked in order, so that the separator plays an isolation role between the positive electrode sheet and the negative electrode current collector, and a battery core is obtained, or the battery core may be obtained after being wound; and the battery core is placed in an outer package, an electrolyte solution is injected and sealed to obtain the sodium-ion battery.

An example of the present application further provides a method for preparing a sodium-ion battery as described above, including the following steps:
a material of a protective layer is mixed with a solvent to prepare a slurry, where the material of the protective layer mainly includes a polymer material;
a surface of a negative electrode current collector is coated with the slurry and dried to form the protective layer, where the protective layer is capable of allowing sodium-ions to pass freely; and

The negative electrode current collector with the protective layer formed thereon is compounded with a separator and a positive electrode sheet.

In an example, there is an accommodation area between the protective layer and the negative electrode current collector, and the sodium-ion battery is subjected to at least one charging and discharging process, so that the accommodation area includes a sodium metal layer formed on the surface of the negative electrode current collector.

Without limitation, the charging and discharging process may include a charging and discharging process during chemical formation, or may also include a charging and discharging process during use.

In some embodiments, the outer package of the sodium-ion battery may be a hard case, such as a hard plastic case, an aluminum case, a steel case, and the like. The outer package of a secondary battery may also be a soft pack, such as a bag-type soft pack. A material of the soft package may be plastic, and as plastic, polypropylene, polybutylene terephthalate, and polybutylene succinate may be enumerated.

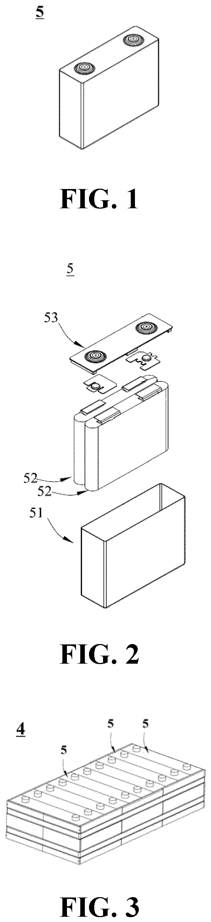

There is no particular limitation on the shape of the sodium-ion battery in the present application, which may be in cylindrical, square or any other shapes. For example, Fig. 1 is a sodium-ion battery 5 having a square structure as an example.

In some embodiments, referring to Fig. 2, the outer package may include a case 51 and a cover plate 53. Here, the case 51 may include a bottom plate and a side plate connected to the bottom plate, with the bottom plate and the side plate enclosing to form an accommodating cavity. The case 51 has an opening that communicates with the accommodating cavity, and the cover plate 53 can cover the opening to close the accommodating cavity. The positive electrode sheet, the negative electrode sheet, and the separator may be formed into an electrode assembly 52 by a winding process or a stacking process. The electrode assembly 52 is encapsulated in the accommodating cavity. The electrolyte solution impregnates the electrode assembly 52. The number of electrode assembly 52 contained in the sodium-ion battery 5 may be one or more, which may be selected by those skilled in the art according to specific actual requirements.

In some embodiments, sodium-ion batteries may be assembled into a battery module, the number of sodium-ion batteries contained in the battery module may be one or more, and the specific number may be selected by those skilled in the art according to the application and capacity of the battery module.

Fig. 3 is a battery module 4 as an example. Referring to Fig. 3, in the battery module 4, a plurality of sodium-ion batteries 5 may be sequentially arranged in a length direction of the battery module 4. Of course, they may be arranged in any other manner. The sodium-ion battery 5 may further be fixed by a fastener.

Optionally, the battery module 4 may further include a shell having an accommodating space, in which the plurality of sodium-ion batteries 5 are accommodated.

In some embodiments, the above battery module may further be assembled into a battery pack, the number of battery modules contained in the battery pack may be one or more, and the specific number may be selected by those skilled in the art according to the application and capacity of the battery pack.

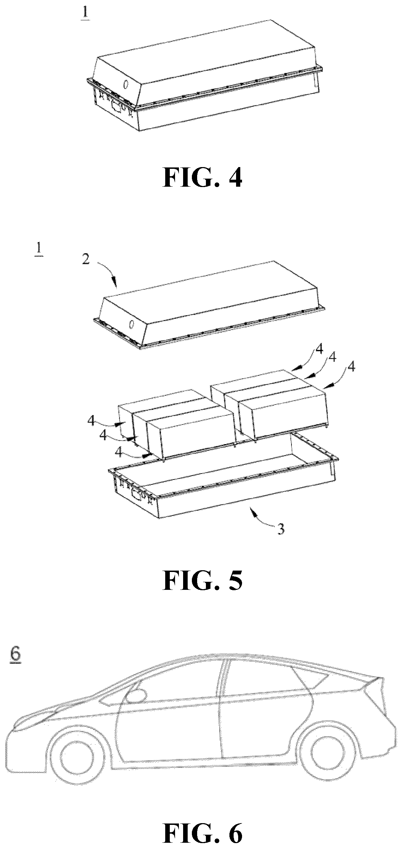

Fig. 4 and Fig. 5 are a battery pack 1 as an example. Referring to Fig. 4 and Fig. 5, the battery pack 1 may include a battery box and a plurality of battery modules 4 disposed in the battery box. The battery box includes an upper box 2 and a lower box 3, the upper box 2 can cover the lower box 3 to form a closed space for accommodating the battery modules 4. The plurality of battery modules 4 may be arranged in the battery box in any manner.

In addition, the present application further provides an electrical apparatus, which includes at least one of the sodium-ion battery, the battery module, or the battery pack provided in the present application. The sodium-ion battery, the battery module or the battery pack may be used as a power source for the electrical apparatus or an energy storage unit of the electrical apparatus. The electrical apparatus may include, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system and the like.

For the electrical apparatus, the sodium-ion battery, the battery module, or the battery pack may be selected according to its use requirements.

Fig. 6 is an electrical apparatus as an example. The electrical apparatus is an all-electric vehicle, a hybrid electric vehicle, a plug-in hybrid electric vehicle, or the like. In order to meet the requirements raised by the electrical apparatus for high power and high energy density of sodium-ion batteries, the battery pack or the battery module may be adopted.

As another example, the apparatus may be a mobile phone, a tablet, a laptop and the like. The apparatus is generally required to be light and thin, and may use a sodium-ion battery as a power source.

### Examples

In order to make the technical problems, technical solutions and beneficial effects of the present application clearer, the present application will be further described in detail below in conjunction with the examples and accompanying drawings. Obviously, the described examples are only some of the examples of the present application, but not all of the examples. The following description of at least one exemplary example is merely illustrative in nature and is in no way intended to limit the present application and its applications. Based on the examples in the present application, all other examples obtained by those of ordinary skill in the art without creative effort fall within the protection scope of the present application.

Where specific techniques or conditions are not specified in the examples, the techniques or conditions described in the literatures of the art or the product specifications are followed. All of the used agents or instruments which are not specified with the manufacturer are conventional commercially-available products.

### I. Preparation Examples

### Preparation Example 1

### [Preparation of positive electrode sheet]

A 10wt% polyvinylidene fluoride binder is fully dissolved in N-methyl pyrrolidone, a 10wt% carbon black conductive agent and an 80wt% positive electrode active material Na₄Fe₃(PO₄)₂P₂O₇ are added to prepare a uniformly dispersed slurry. A surface of an aluminum foil is uniformly coated with the slurry, and then it is transferred to a vacuum drying oven to be dried completely. An obtained electrode sheet is rolled and then punched to obtain a positive electrode sheet.

### [Preparation of negative electrode sheet]

Sodium carboxymethyl cellulose is added into water and stirred to form a uniform slurry, a surface of a copper foil is coated with the slurry, then it is transferred to a vacuum drying oven to be dried completely to form a polymer protective layer, and then punched to obtain a negative electrode sheet.

### [Preparation of electrolyte solution]

In an argon atmosphere glove box (H₂O <0.1 ppm, and O₂<0.1 ppm), sodium salt sodium hexafluorophosphate and an additive, namely rubidium nitrate are dissolved in an organic solvent, namely ethylene glycol dimethyl ether, and stirred uniformly to obtain an electrolyte solution with the additive of 5 wt% and a sodium hexafluorophosphate sodium salt concentration of 1.5 mol/L, namely, the electrolyte solution of Example 1.

### [Separator]

A polypropylene film is used as the separator.

### [Assembly of sodium-ion battery]

A positive electrode sheet, a separator and a negative electrode sheet are stacked in sequence, so that the separator is positioned between the positive electrode sheet and the negative electrode sheet to serve for isolation, and the above electrolyte solution is added to assemble the battery.

The sodium-ion battery preparation methods of Examples 2 to 23 and Comparative Examples 1 to 2 are similar to that of Example 1. Those skilled in the art can change the types of polymers, the thickness of the polymer protective layer, the types of sodium salts, the types of additives, the content of additives, and the type of electrolyte solution solvent to obtain Examples 2 to 23 and Comparative Examples 1 to 2, respectively. The corresponding preparation parameters and performance parameters are detailed in Table 1.

Comparative Example 1 only uses the copper foil without preparing a polymer protective layer thereon. Comparative Example 2 uses only the copper foil, without preparing a polymer protective layer thereon, and without adding additives to the electrolyte solution.

### II. Battery performance test

### 1. Coulombic efficiency

Example 1 is taken as an example, a prepared sodium-ion secondary battery is charged to 3.7 V at a constant current of 1/3 C at 25°C, and then charged at a constant voltage of 3.7 V until the current drops to 0.05 C to obtain a first charge capacity (Cc1); and then it is discharged to 2.5 V at the constant current of 1/3 C to obtain a first discharge capacity (Cd1), and the Coulombic efficiency of the sodium-ion battery is calculated according to the following formula. Coulombic efficiency of sodium-ion battery = first discharge capacity (Cd1)/first charge capacity (Cc1)

The test processes of the comparative examples and other examples are the same as above.

### 2. Capacity retention rate

Example 1 is taken as an example, a sodium-ion battery is charged at 25°C with a constant current of 1 C to 3.7 V, then charged with a constant voltage of 3.7 V until the current drops to 0.05 C, and then discharged with the constant current of 1 C to 2.5 V to obtain a discharge capacity of the first cycle (Cd1); and charging and discharging are repeated until the nth cycle to obtain a discharge capacity of the sodium-ion battery after n cycles, which is recorded as Cdn, and the capacity retention rate of the sodium-ion battery is calculated according to the following formula: Capacity retention rate = discharge capacity after n cycles (Cdn)/discharge capacity in the first cycle (Cd1).

The test processes of comparative examples and other examples are the same as above.

### 3. Sodium dendrite

The above-mentioned sodium-ion battery after 100 cycles is disassembled in an argon atmosphere glove box (H₂O<0.1 ppm, and O₂<0.1 ppm), and the surface morphology of the negative electrode sheet is visually observed to determine whether there are sodium dendrites generated. If the negative electrode sheet has no white spot, it is judged that there is no sodium dendrite. If there are sporadic white spots on the negative electrode sheet, it is judged that the sodium dendrites are mild. If there are dense white spots on the negative electrode sheet, it is judged that the sodium dendrites are severe.

Test results are detailed in Table 2.

**Table 1**

| No. | Polymer protective layer | Polymer protective layer thickness µm | Polymer protective layer weight mg/1540.25 mm² | Sodium salt | Sodium salt concentration mol/L | Additive | Additive content wt% | Electrolyte solution solvent |
|---|---|---|---|---|---|---|---|---|
| Example 1 | **Sodium carboxymethyl cellulose** | 1.5 | 0.85 | NaPF₆ | 1.5 | RbNO₃ | 5 | Ethylene glycol dimethyl ether |
| Example 2 | **Carboxymethyl cellulose sodium** | 1.5 | 0.82 | NaPF₆ | 1.5 | RbNO₃ | 5 | Ethylene glycol dimethyl ether |
| Example 3 | **Sodium alginate** | 1.5 | 0.84 | NaPF₆ | 1.5 | RbNO₃ | 5 | Ethylene glycol dimethyl ether |
| Example 4 | **Sodium polyacrylate** | 1.5 | 0.92 | NaPF₆ | 1.5 | RbNO₃ | 5 | Ethylene glycol dimethyl ether |
| Example 5 | **Polyvinylidene fluoride-hexafluoropropylene** | 1.5 | 0.88 | NaPF₆ | 1.5 | RbNO₃ | 5 | Ethylene glycol dimethyl ether |
| Example 6 | **Polyvinylidene fluoride** | 1.5 | 0.86 | NaPF₆ | 1.5 | RbNO₃ | 5 | Ethylene glycol dimethyl ether |
| Example 7 | **Styrene butadiene rubber** | 1.5 | 0.90 | NaPF₆ | 1.5 | RbNO₃ | 5 | Ethylene glycol dimethyl ether |
| Example 8 | **Polyethylene oxide** | 1.5 | 0.68 | NaPF₆ | 1.5 | RbNO₃ | 5 | Ethylene glycol dimethyl ether |
| Example 9 | Sodium carboxymethyl cellulose | **0.2** | **0.12** | NaPF₆ | 1.5 | RbNO₃ | 5 | Ethylene glycol dimethyl ether |
| Example 10 | Sodium carboxymethyl cellulose | **1** | **0.66** | NaPF₆ | 1.5 | RbNO₃ | 5 | Ethylene glycol dimethyl ether |
| Example 11 | Sodium carboxymethyl cellulose | **2** | **0.98** | NaPF₆ | 1.5 | RbNO₃ | 5 | Ethylene glycol dimethyl ether |
| Example 12 | Sodium carboxymethyl cellulose | **5** | **4.65** | NaPF₆ | 1.5 | RbNO₃ | 5 | Ethylene glycol dimethyl ether |
| Example 13 | Sodium carboxymethyl cellulose | 1.5 | 0.85 | **NaDFO B** | 1.5 | RbNO₃ | 5 | Ethylene glycol dimethyl ether |
| Example 14 | Sodium carboxymethyl cellulose | 1.5 | 0.85 | **NaBF4** | 1.5 | RbNO₃ | 5 | Ethylene glycol dimethyl ether |
| Example 15 | Sodium carboxymethyl cellulose | 1.5 | 0.85 | NaPF₆ | 1.5 | **KNO₃** | 5 | Ethylene glycol dimethyl ether |
| Example 16 | Sodium carboxymethyl cellulose | 1.5 | 0.85 | NaPF₆ | 1.5 | **LiNO₃** | 5 | Ethylene glycol dimethyl ether |
| Example 17 | Sodium carboxymethyl cellulose | 1.5 | 0.85 | NaPF₆ | 1.5 | **NaNO₃** | 5 | Ethylene glycol dimethyl ether |
| Example 18 | Sodium carboxymethyl cellulose | 1.5 | 0.85 | NaPF₆ | 1.5 | RbNO₃ | **0.5** | Ethylene glycol dimethyl ether |
| Example 19 | Sodium carboxymethyl cellulose | 1.5 | 0.85 | NaPF₆ | 1.5 | RbNO₃ | **2** | Ethylene glycol dimethyl ether |
| Example 20 | Sodium carboxymethyl cellulose | 1.5 | 0.85 | NaPF₆ | 1.5 | RbNO₃ | **10** | Ethylene glycol dimethyl ether |
| Example 21 | Sodium carboxymethyl cellulose | 1.5 | 0.85 | NaPF₆ | 1.5 | RbNO₃ | **20** | Ethylene glycol dimethyl ether |
| Example 22 | Sodium carboxymethyl cellulose | 1.5 | 0.85 | NaPF₆ | 1.5 | / | / | Ethylene glycol dimethyl ether |
| Example 23 | Sodium carboxymethyl cellulose | 1.5 | 0.85 | NaPF₆ | 1.5 | RbNO₃ | 5 | **Ethyl methyl carbonate** |
| Comparative Example 1 | / | / | / | NaPF₆ | 1.5 | RbNO₃ | 5 | Ethylene glycol dimethyl ether |
| Comparative Example 2 | / | / | / | NaPF₆ | 1.5 | / | / | Ethylene glycol dimethyl ether |

**Table 2**

| No. | Thickness of sodium metal layer nm | Coulombic efficiency (%) | Capacity retention rate (%) after cycling for 100 cycles | Sodium dendrite |
|---|---|---|---|---|
| Example 1 | 258 | 98.1 | 89.5 | None |
| Example 2 | 250 | 97.3 | 88.1 | None |
| Example 3 | 241 | 96.8 | 87.8 | None |
| Example 4 | 233 | 96.2 | 87.2 | None |
| Example 5 | 230 | 95.7 | 86.6 | None |
| Example 6 | 222 | 95.0 | 85.3 | None |
| Example 7 | 210 | 94.4 | 84.5 | None |
| Example 8 | 207 | 94.1 | 84.0 | None |
| Example 9 | 196 | 91.2 | 80.6 | None |
| Example 10 | 240 | 96.6 | 87.5 | None |
| Example 11 | 260 | 98.5 | 90.0 | None |
| Example 12 | 265 | 98.6 | 90.2 | None |
| Example 13 | 253 | 97.5 | 88.4 | None |
| Example 14 | 230 | 96.0 | 86.8 | None |
| Example 15 | 225 | 95.1 | 85.5 | None |
| Example 16 | 203 | 93.4 | 83.5 | None |
| Example 17 | 201 | 93.0 | 82.9 | None |
| Example 18 | 198 | 91.8 | 81.4 | None |
| Example 19 | 210 | 94.5 | 84.8 | None |
| Example 20 | 200 | 92.4 | 82.5 | None |
| Example 21 | 194 | 91.1 | 80.5 | None |
| Example 22 | 166 | 85.7 | 77.1 | None |
| Example 23 | 145 | 83.1 | 75.6 | Mild |
| Comparative Example 1 | 130 | 80.1 | 72.6 | Severe |
| Comparative Example 2 | 96 | 72.8 | 63.7 | Severe |

It can be seen from the comparison between Examples 1 to 23 and Comparative Examples 1 to 2 that in the batteries of Examples 1 to 23 without negative electrode active materials, the formation of sodium dendrites can be significantly reduced or avoided by providing the polymer material layer, and excellent Coulombic efficiency and cycle performance are achieved at the same time.

It can be seen from the comparison between Examples 1 to 8 that different types of polymer materials can avoid the formation of the sodium dendrites and achieve excellent Coulombic efficiency and cycle performance, among which sodium carboxymethyl cellulose is the best.

It can be seen from the comparison between Examples 1 and 9 to 12 that the formation of the sodium dendrites can be avoided in the range of polymer material thickness of 0.2 µm to 5 µm (weight of 0.1 to 5 mg/1540.25 mm²), and as the thickness (weight) of the polymer material increases, the Coulombic efficiency and cycle performance are improved, with the thickness in the range of 1 µm to 2 µm (weight of 0.5 to 1 mg/1540.25 mm²) being the best. Below this range, the Coulombic efficiency and cycle performance will decrease slightly, beyond this range, there is no significant change in Coulombic efficiency and cycle performance, but the energy density of the battery is reduced.

It can be seen from the comparison between Examples 1 and 13-14 that different types of sodium salts can avoid the formation of the sodium dendrites and achieve better Coulombic efficiency and cycle performance, among which sodium hexafluorophosphate is the best.

It can be seen from the comparison between Examples 1 and 15 to 17 that different types of nitrate additives can avoid the formation of the sodium dendrites and achieve better Coulombic efficiency and cycle performance, among which rubidium nitrate is the best.

It can be seen from the comparison between Examples 1 and 18 to 21 that the formation of sodium dendrites can be avoided in the range of 0.5% to 20% of the addition amount of the nitrate additives. At the same time, as the addition amount of the nitrate additives increases, the Coulombic efficiency and cycle performance first are improved and then reduced, with the best in the range of 2% to 10%.

It can be seen from the comparison between Examples 1 and 22 that the addition of nitrate additives can significantly improve the Coulombic efficiency and cycle performance.

It can be seen from the comparison between Examples 1 and 23 that the use of ether solvents can further avoid the formation of sodium dendrites.

It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications applied to the embodiments that can be conceived by those skilled in the art, and other modes constructed by combining some of the constituent elements of the embodiments are also included in the scope of the present application.

## Claims

1. A sodium-ion battery, including a positive electrode sheet, a separator and a negative electrode current collector, wherein the separator is disposed between the positive electrode sheet and the negative electrode current collector, a surface of the negative electrode current collector is provided with a protective layer capable of allowing sodium-ions to pass freely, and the protective layer comprises a polymer material.

2. The sodium-ion battery according to claim 1, wherein the polymer material comprises one or more of sodium carboxymethyl cellulose, carboxymethyl cellulose sodium, sodium alginate, sodium polyacrylate, polyvinylidene fluoride, polyvinylidene fluoride-hexafluoropropylene, styrene butadiene rubber, polytetrafluoroethylene, polyvinyl alcohol and polyethylene oxide.

3. The sodium-ion battery according to claim 1 or 2, wherein a thickness of the protective layer is 0.2 µm to 5 µm.

4. The sodium-ion battery according to claim 5, wherein the thickness of the protective layer is 1 µm to 2 µm.

5. The sodium-ion battery according to any one of claims 1 to 4, wherein a weight of the protective layer is 0.1 to 5 mg/1540.25 mm² based on a surface area of the negative electrode current collector.

6. The sodium-ion battery according to claim 5, wherein the weight of the protective layer is 0.5 to 1 mg/1540.25 mm² based on the surface area of the negative electrode current collector.

7. The sodium-ion battery according to any one of claims 1 to 6, wherein the protective layer and the negative electrode current collector have an accommodation area therebetween, and the accommodation area comprises a sodium metal layer formed on the negative electrode current collector.

8. The sodium-ion battery according to claim 7, wherein the sodium metal layer is formed in a charging and discharging process of the sodium-ion battery; and optionally, the charging and discharging process comprises a charging and discharging process during chemical formation.

9. The sodium-ion battery according to claim 7 or 8, wherein a thickness of the sodium metal layer is P, and 0<P≤400 nm.

10. The sodium-ion battery according to any one of claims 1 to 9, further comprising an electrolyte solution, wherein the electrolyte has at least one of the following characteristics:
(1) a solvent in the electrolyte solution comprises one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether and crown ether;
(2) an electrolyte sodium salt in the electrolyte solution comprises one or more of sodium hexafluorophosphate, sodium difluoroborate, sodium tetrafluoroborate, sodium bisoxaloborate, sodium perchlorate, sodium hexafluoroarsenate, sodium bis(fluorosulfonyl) imide, sodium trifluoromethanesulfonate and sodium bis(trifluoromethanesulfonyl) imide; and
(3) a molar concentration of the electrolyte sodium salt in the electrolyte solution is 0.5 mol/L to 8 mol/L; and optionally, the molar concentration of the electrolyte sodium salt in the electrolyte solution is 1 mol/L to 4 mol/L.

11. The sodium-ion battery according to claim 10, wherein the electrolyte solution further comprises a nitrate additive.

12. The sodium-ion battery according to claim 11, wherein the nitrate additive comprises one or more of lithium nitrate, sodium nitrate, potassium nitrate and rubidium nitrate.

13. The sodium-ion battery according to claim 11 or 12, wherein based on a mass percentage in the electrolyte solution, an addition amount of the nitrate additive is 0.5% to 20%; and optionally, the addition amount of the nitrate additive is 2% to 10%.

14. The sodium-ion battery according to any one of claims 11 to 13, wherein a surface of the sodium metal layer further comprises an SEI layer, and a material of the SEI layer comprises one or more of NaNₓO_{y} and Na₃N, where 3x+2y=1.

15. A method for preparing a sodium-ion battery, comprising the following steps:
mixing a material of the protective layer with a solvent, and preparing a slurry, the protective layer comprising a polymer material;
coating a surface of a negative electrode current collector with the slurry, and drying to form the protective layer, the protective layer allowing sodium-ions to pass freely; and
compounding the negative electrode current collector with the protective layer formed thereon with a separator and a positive electrode sheet.

16. The method for preparing the sodium-ion battery according to claim 15, wherein the protective layer and the negative electrode current collector have an accommodation area therebetween, and the sodium-ion battery is subjected to at least one charging and discharging process, so that the accommodation area comprises a sodium metal layer formed on the surface of the negative electrode current collector; and optionally, the charging and discharging process comprises a charging and discharging process during chemical formation.

17. An electrical apparatus, comprising at least one of the sodium-ion battery according to any one of claims 1 to 14 and a sodium-ion battery prepared by the preparation method according to any one of claims 15 to 16.
